# EUROPEAN PATENT SPECIFICATION

(11) **EP 1 668 521 B1**
(45) Date of publication and mention of the grant of the patent: **06.02.2008**
(21) Application number: 04770054.7
(22) Date of filing: 22.09.2004
(51) Int. Cl.: G06F 13/28, G06F 13/14

(54) **METHOD AND APPARATUS FOR MASTER/SLAVE DIRECT MEMORY ACCESS HARDWARE AND SOFTWARE CONTROL**
VERFAHREN UND VORRICHTUNG FÜR MASTER-SLAVE-DIREKTSPEICHERZUGRIFF-HARDWARE- UND -SOFTWARESTEUERUNG
PROCEDES ET APPAREILS DE COMMANDE DE MATERIEL ET DE LOGICIEL D'ACCES DIRECT MEMOIRE DE TYPE MAITRE/ESCLAVE

(30) Priority: 23.09.2003 US 505069 P
(43) Date of publication of application: 14.06.2006
(73) Proprietor: Koninklijke Philips Electronics N.V., 5621 BA Eindhoven (NL)
(72) Inventor: FREDERIKS, Guido, NL-5621 BA Eindhoven (NL)
(74) Representative: White, Andrew Gordon
(86) International application number: PCT/IB2004/051819
(87) International publication number: WO 2005/029341

(56) References cited:
- WO-A-94/09436
- US-A- 4 716 523
- US-A- 4 782 439
- US-A- 5 111 425
- US-A1- 2003 093 492

## Description

The present invention relates generally to direct memory access (DMA) and, more particularly, to DMA hardware/software control techniques and structures that provide optimized data throughput.

Technologies associated with the communication of information have evolved rapidly over the last several decades. One of these communication technologies involves the transfer of data between memory devices. For example, the memory systems of various computer processing systems typically include a primary memory device and one or more larger, less expensive secondary memory devices. This permits large quantities of information to be stored in secondary memory for loading into the primary memory device when needed. Similar data transfers occur between memory devices in interconnected processing systems, which transfers are sometimes referred to as "master-slave" data transfers, and which are carried out over an interconnect device, e.g., a data bus. For example, the processor of a cellular telephone (master) may need to transfer data to and from subsystem processors, e.g., an antenna subsystem (slave).

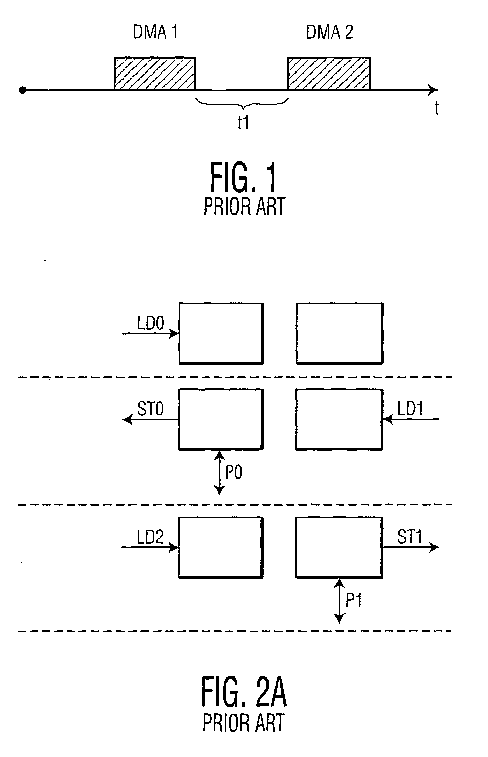

One technique for performing such data transfers is known as direct memory access (DMA). DMA refers to a capability provided by some computer processing architectures that allows data to be sent directly from one memory device to another memory device without involving the main processor(s), thereby speeding up overall processing speeds. Usually a specified portion of memory is designated as an area to be used for DMA transfers. One problem with master-slave DMA data transfers occurs when a large number of data blocks need to be transferred between the master and slave devices. When this arises, conventional DMA data transfer techniques are challenged to perform such transfers efficiently and typically confront various latency issues. One example of such a latency issue is shown in the timeline of Figure 1. Therein, a first DMA data block is transferred from a master device to a slave device during the period DMA 1 and a second portion of the data block is transferred between the master and slave devices during the period DMA 2. Note that between time periods DMA 1 and DMA 2 there is a delay period denoted t1 in Figure 1. During this time, various handshaking activities occur between the master and slave devices. For example, at the end of DMA 1, the master device will signal a DMA controller indicating that it has transferred the first portion of DMA data. The DMA controller will then reset register(s) used in the DMA data transfer process, e.g., an address register. After the handshaking is completed, the second DMA transfer (DMA2) can commence. This conventional DMA technique suffers from, among other things, an inefficiency in DMA transfer time due to the delay period t1.

One partial solution to this problem involves using two memory portions for DMA transactions an example of which is described in U.S. Patent No. 6,341,318. Therein, with reference to Figures 2(a) and 2(b), in iteration 0, memory bank A is loaded (LD0) with a first portion of data from a data block. In iteration 1, a next portion of data is loaded (LD1) into memory bank B while the previously loaded portion in memory bank A is processed (P0) and then stored (ST0). In iteration 2, memory bank A is again loaded (LD2) with a third portion of data from a data block while the previously loaded portion in memory bank B is processed (P1) and then stored (ST1). The loading and processing/storing operations continue switching between each memory bank until all of the data block is loaded, processed, and stored. This technique may reduce latency associated with this type of DMA data transfer since the processing of portions of oversized DMA data blocks can be performed in parallel. However, the technique described in the '318 patent does not address the afore-described problem of handling a large number of DMA transfers between master and slave devices. Under such conditions, even using two DMA memory locations may be insufficient to eliminate latency associated with setting up each transfer. Moreover, the '318 patent provides relatively little control or status functionality in its register architecture. For example, no mechanisms are described for servicing higher level software protocols during the DMA transaction. As such, the DMA transaction architecture described in the '318 patent does not provide a DMA architecture that is sufficiently flexible to be reused without modifications between different hardware/software applications having different higher level servicing needs.

Further related prior art can be found in US.5 111 425 and US-4 782 439.

Accordingly, it would be desirable to provide more flexible techniques and devices for DMA data transfers which avoid the problems of conventional techniques.

Systems and methods according to the present invention address this need and others by providing a robust DMA architecture including registers that flexibly support higher level hardware/software servicing needs during a DMA transfer. Among other things, such registers include mailbox registers and scratch pad registers which provide DMA architectures and methods according to the present invention with the capability to provide multiple interrupt channels and overflow data transfer capabilities that permit disparate hardware/software applications to reuse these DMA architectures with changes in their programming rather than changes in their architecture.

According to one exemplary embodiment of the present invention, a direct memory access (DMA) system for transferring information between a master device and a slave device comprises a first plurality of DMA channels for transferring information from the master device to the slave device; a second plurality of DMA channels for transferring information from the slave device to the master device; a first set of control registers which coordinate use of the first plurality of DMA channels to transfer information from the master device to the slave device; and a second set of control registers which coordinate use of the second plurality of DMA channels to transfer information from the slave device to the master device, wherein both the first set of control registers and the second set of control registers include at least one mailbox register for selectively providing an interrupt signal to a respective one of the master device and the slave device, in response to data written to the at least one mailbox register by the other of the master device and the slave device, during the DMA transaction.

According to another exemplary embodiment of the present invention, a method for direct memory access (DMA) information transfer between a master device and a slave device comprises the steps of: storing a first data portion received during a DMA transaction using a first DMA channel; storing a second data portion received during the DMA transaction using a second DMA channel; and selectively providing an interrupt signal to one of the master device and the slave device, by writing data in at least one mailbox register by the other of the master device and the slave device, during the DMA transaction.

The accompanying drawings illustrate exemplary embodiments of the present invention, wherein:
FIG. 1 depicts a timeline illustrating a DMA data transfer according to one conventional technique using a single memory area designated for DMA data transfers;

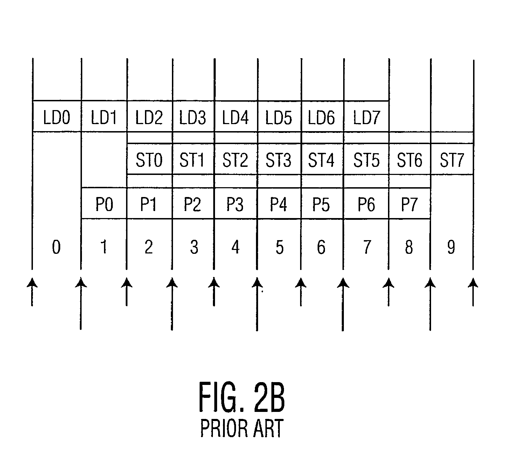

FIGS. 2(a) and 2(b) illustrate a conventional DMA data transfer using two memory areas;
FIG. 3 depicts a block diagram of a master-slave DMA architecture according to an exemplary embodiment of the present invention;
FIG. 4 shows an enlarged view of the slave portion of the DMA architecture of FIG. 3 including exemplary register groups;
FIG. 5 is a table providing an overview of various registers which can be included in DMA architectures according to exemplary embodiments of the present invention;
FIGS. 6(a)-6(l) illustrate exemplary individual register structures according to exemplary embodiments of the present invention;
FIG. 7 is a flowchart illustrating an exemplary method for transferring data from a master device to a slave device from the master's perspective according to an exemplary embodiment of the present invention;
FIG. 8 is a flowchart illustrating an exemplary method for transferring data from a master device to a slave device from the slave's perspective according to an exemplary embodiment of the present invention;
FIG. 9 is a flowchart illustrating an exemplary method for transferring data from a slave device to a master device from the slave's perspective according to an exemplary embodiment of the present invention; and
FIG. 10 is a flowchart illustrating an exemplary method for transferring data from a slave device to a master device from the master's perspective according to an exemplary embodiment of the present invention
The following detailed description of the invention refers to the accompanying drawings. The same reference numbers in different drawings identify the same or similar elements. Also, the following detailed description does not limit the invention. Instead, the scope of the invention is defined by the appended claims.

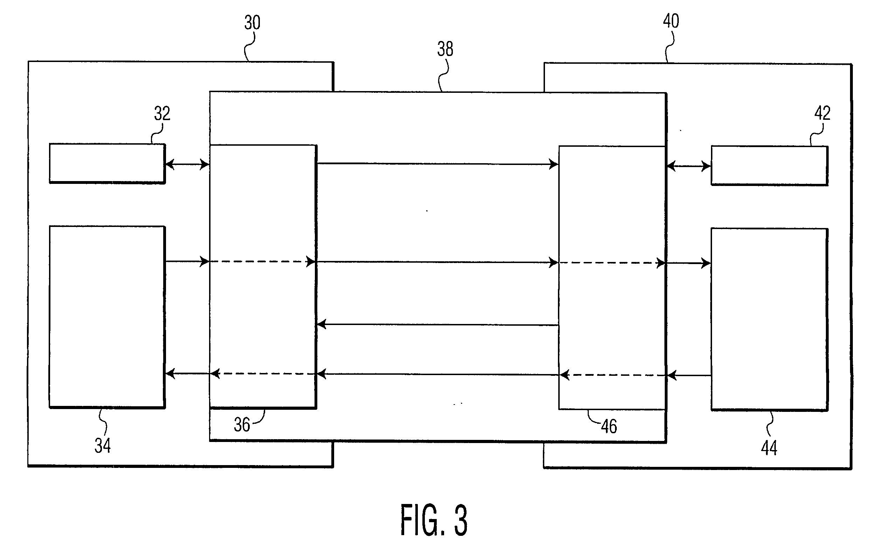

In order to provide some context for this discussion, an exemplary master-slave system in which techniques and devices according to exemplary embodiments of the present invention can be implemented is depicted in the block diagram of Figure 3. Therein, the master device 30 includes a processor 32, memory device 34 and master DMA controller 36 (master DMA controller 36 may be logically viewed as part of the hardware connect layer 38). Similarly, the slave device 40 includes its own processor 42, memory device 44 and slave DMA controller 46 (slave DMA controller 46 may also be logically viewed as part of the hardware connect layer 38). The hardware connect layer 38 can be implemented as, for example, any suitable data bus that can convey the depicted functionality, e.g., a master to slave interrupt signal, a master to slave DMA data transfer signal, a slave to master interrupt signal and a slave to master DMA data transfer signal. Devices 34 and 44 are not limited to implementation as memory devices *per* se and can, alternatively, be any other devices which use data transferred via a bus from another device.

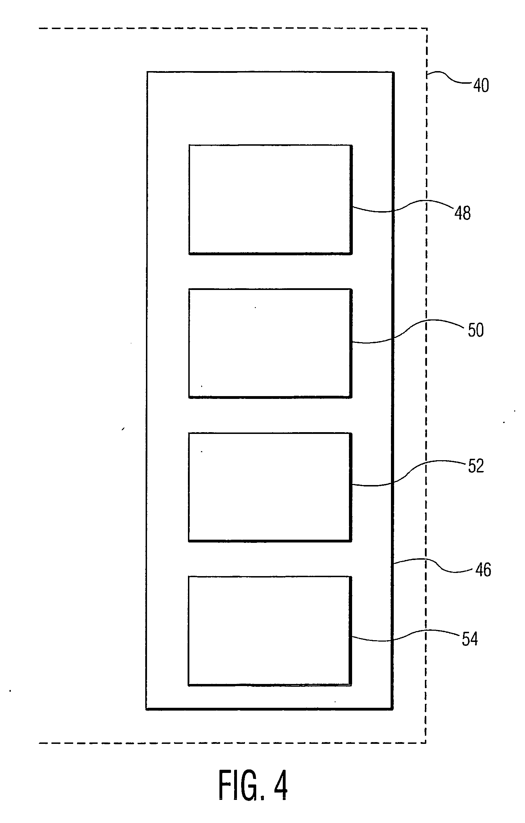

Figure 4 illustrates the slave DMA controller 46 in more detail and, in particular, shows a general grouping of various registers which can be used in accordance with exemplary embodiments of the present invention to coordinate DMA data transfers. A first (optional) group 48 of registers includes hardware connection layer 38 specific registers used by the master device 30 to control slave DMA and/or slave interrupt generation activity. For example, if an SDIO bus is used as hardware connect layer 38, the first group of registers 48 may include a register which indicates whether one bit mode or four bit mode is being used. Other examples include setting hardware specific registers to indicate whether DMA data transfers are occurring in full duplex mode or half duplex mode and/or the operating frequency. Typically, the hardware specific registers 48 (if any) will be only programmed during an initialization phase. A second group of registers 50 include master to slave mailbox and scratch registers which are used by the master device 30 to transfer software specific information to the slave device 40. As mentioned earlier, mailbox and scratch registers provide, among other features flexibility for higher level software and hardware protocols to operate during DMA activities. For example, when the master device 40 writes in a mailbox register, an interrupt signal can be sent to the slave processor 42. The generation of the interrupt signal responsive to writing in the mailbox register is programmable, as described below with respect to the control registers. The slave device 30 will then read the information stored in the mailbox register, which results in the interrupt being cleared. The information written to mailbox registers according to exemplary embodiments of the present invention may vary widely depending upon the master and slave devices being interconnected by the DMA architectures. For example, if the master device is a cellular telephone's central processor and the slave device is an antenna subsystem, the master device could write instructions to the antenna subsystem into the mailbox register(s), e.g., requesting the antenna subsystem to initiate low power consumption operation. Thus, the mailbox registers can be used to provide built-in interrupt channels which can be used in various ways depending upon the interconnected devices. The scratch registers are similar to the mailbox registers except that writing to a scratch register does not result in the generation of an interrupt signal. Thus, for example, the scratch registers can be used to carry overflow data associated with a command transferred between the master and slave devices via the mailbox register. Alternatively, the slave device 40 can find master device status information in a scratch register.

Register group 52 depicts mailbox and scratch registers for the slave to master direction. This group of registers performs similar functions to those described above with respect to group 50. When the slave device 40 writes in one of these mailbox registers, an interrupt signal can be sent to master device 30, subject to control register programming. When the master device 30 reads the corresponding mailbox, the interrupt will be cleared. Register group 54 depicts the DMA status/control registers which, among other things, control the amount of data that is transferred in one DMA cycle. In the master-to-slave direction, the control registers also indicate the address to which the data will be written, while in the slave-to-master direction the control registers also indicate the address from which the data will be read. As will be described in more detail below regarding individual registers and their functions, the status registers provide an indication of DMA activity as well as which interrupts are pending.

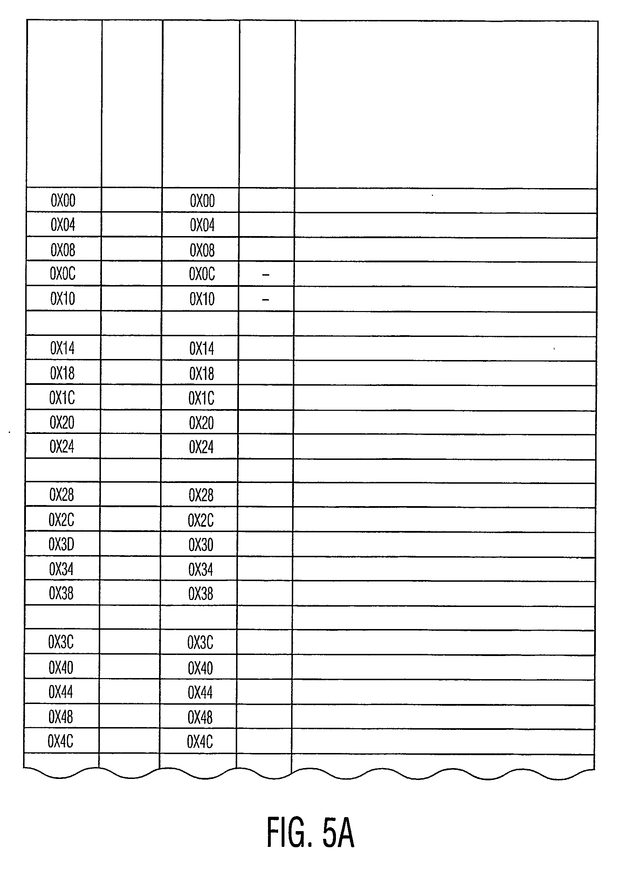

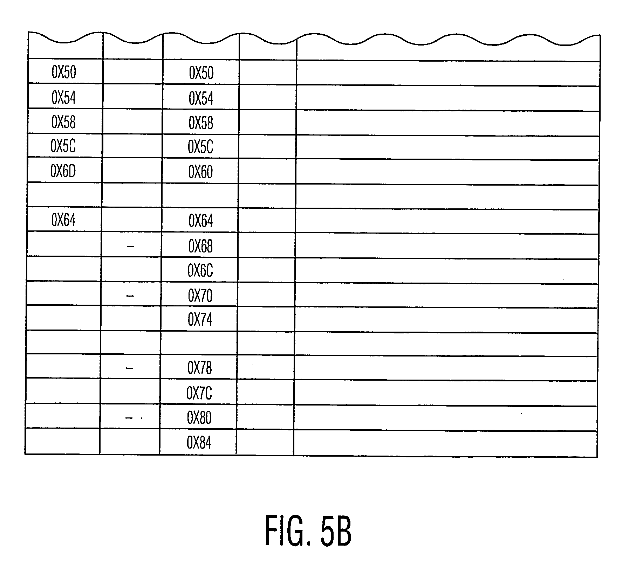

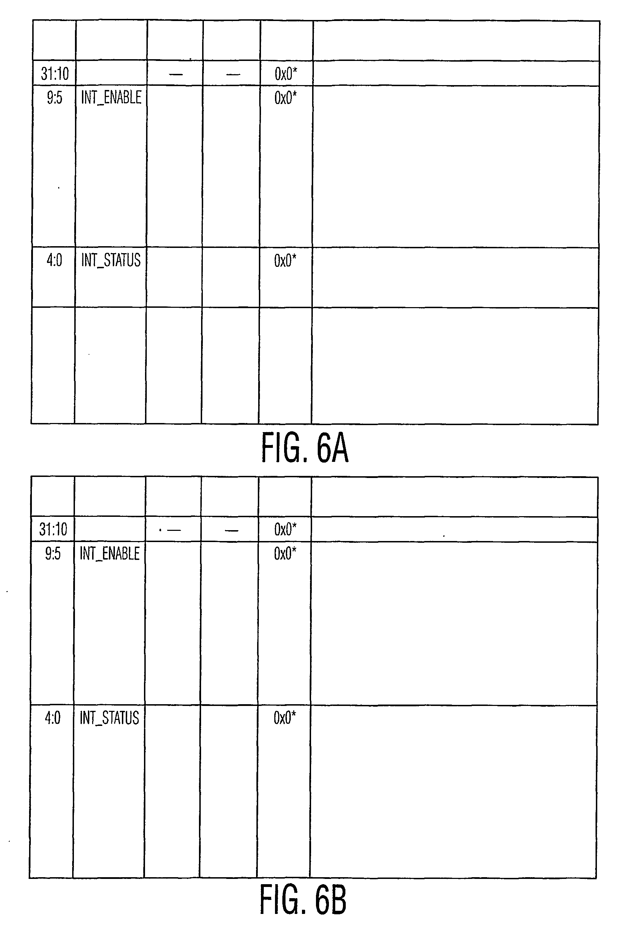

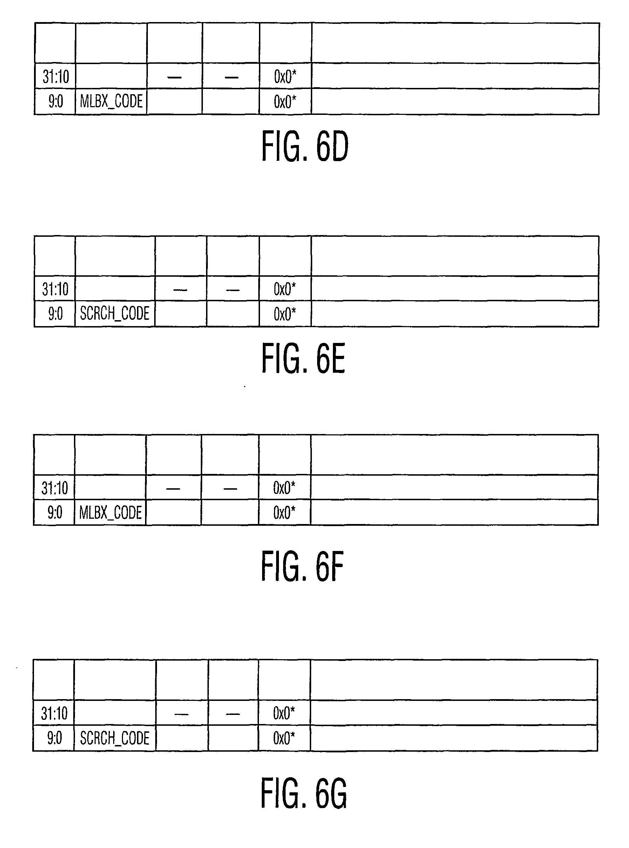

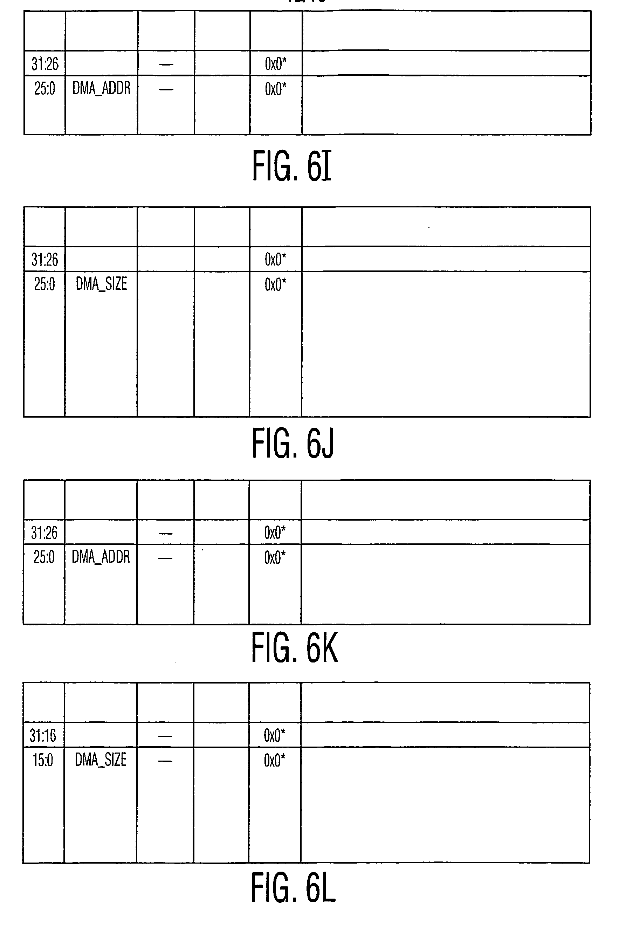

To better understand architectures according to exemplary embodiments of the present invention, a more detailed example of the various registers mentioned above will now be provided with respect to Figures 5-6(l). Those skilled in the art will appreciate that the details associated with this example are purely illustrative in nature and can be varied. Among other things, the addresses and bit lengths are purely exemplary. Figure 5 provides a table listing the programmable registers on the slave side of the hardware connect layer 38 including their type. Each of the registers listed in the table of Figure 5 is depicted in more detail in a corresponding one of Figures 6(a)-6(l).

Starting with Figure 6(a), an example of the master to slave interrupt status/control register is provided. This register type is also referred to herein as a "mailbox interrupt status/control register". This control/status register is used to control, and provide information regarding, the master-to-slave mailbox registers. Specifically, the slave device 40 can set a control bit associated with each of the master-to-slave mailbox registers to permit or deny interrupts to be generated when the corresponding mailbox register is written to by the master device 30. This feature can be used, for example, during initialization when disabling the mailbox interrupts may be desirable. After initialization, the slave device 40 may then enable the mailbox register interrupts. Status bits for each master-to-slave mailbox are also provided in this register, which permit the slave device 40 to identify which mailbox or mailboxes caused it to receive an interrupt. Once read, these status bits are reset. Similarly, Figure 6(b) depicts an interrupt status/control register for the slave-to-master direction. Thus, the master device 30 can set a control bit associated with each of the slave- to-master mailbox registers to permit or deny interrupts to be generated when the corresponding mailbox register is written to by the slave device 30. Status bits for each slave-to-master mailbox are also provided in this register, which permit the master device 30 to check to see if an interrupt is pending.

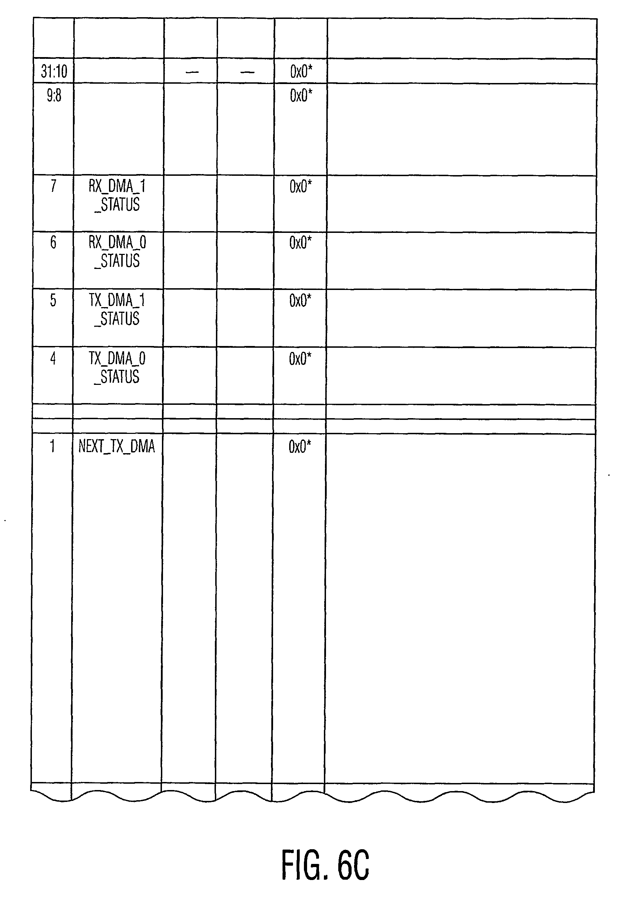

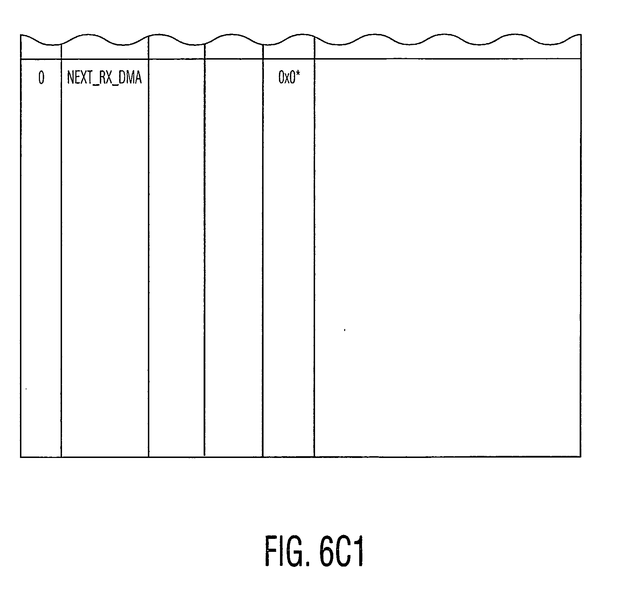

Figure 6(c) depicts an exemplary DMA status/control register. This register can include, among other things, bits to store version information, bits indicating DMA activity for each DMA memory location in each direction, and bits for controlling which of the two DMA memory locations will be used for a next DMA transaction. With respect to this latter function, it can be seen in Figure 6(c) that the values for bits 0 and 1 in this register can be automatically inverted after each master-to-slave and slave-to-master transaction, respectively, to provide a round robin usage of the dual memory locations as described in more detail below. Figures 6(d)-6(g) provide examples of a master-to-slave mailbox register, a master-to-slave scratch register, a slave-to-master mailbox register and a slave-to-master scratch register respectively. Although multiple mailbox and scratch registers can be provided in each direction for DMA architectures according to the present invention, only one of each type/direction is described here since each of these types of registers can have the same structure and functionality. The number of bits allocated for storage of mailbox code and/or scratch values can be more or fewer than the 10 bits indicated in the examples shown in Figures 6(d)-6(g).

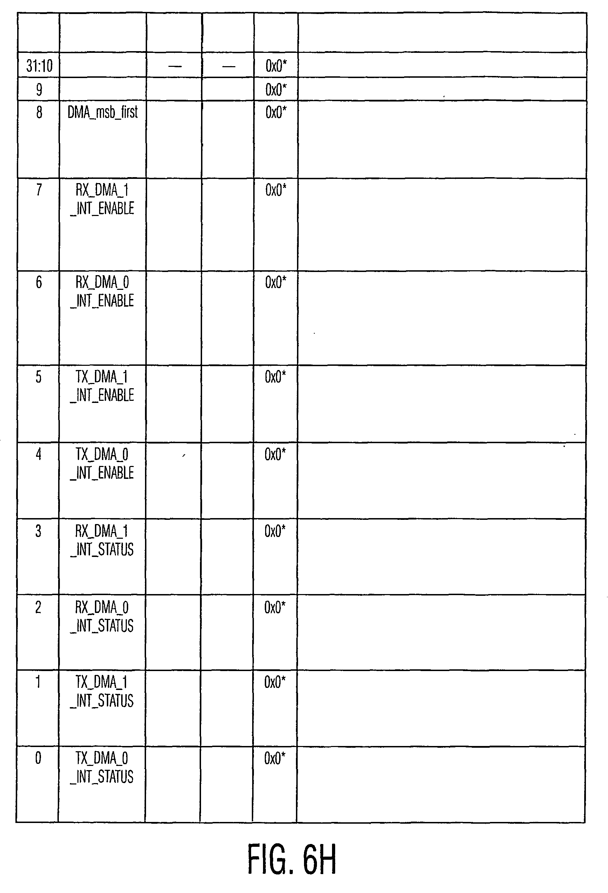

Figure 6(h) illustrates an exemplary DMA interrupt status/control register. This register provides for programmable enablement/disablement of the interrupt signals which are used to signal the completion of a DMA transfer. One bit is provided for each DMA memory location for each direction, for a total of four control bits in this exemplary embodiment of the present invention. Similarly, four bits provide status information for each DMA memory location for each direction regarding whether or not an interrupt has been set. The DMA interrupt status/control register can also be used to provide other functionality, for example providing an indicator regarding whether 16 bit data values are transmitted with their most significant bit (MSB) first or least significant bit (LSB) first. Figures 6(i)-6(l) illustrate exemplary master-to-slave DMA address register, master-to-slave DMA size register, slave-to-master DMA address register and slave-to-master DMA size register, respectively. One address and one size register can be provided for each DMA memory location used to transfer DMA data to specify the address and size of each memory location. According to this exemplary embodiment, therefore, eight of these registers can be used as seen in Figure 5.

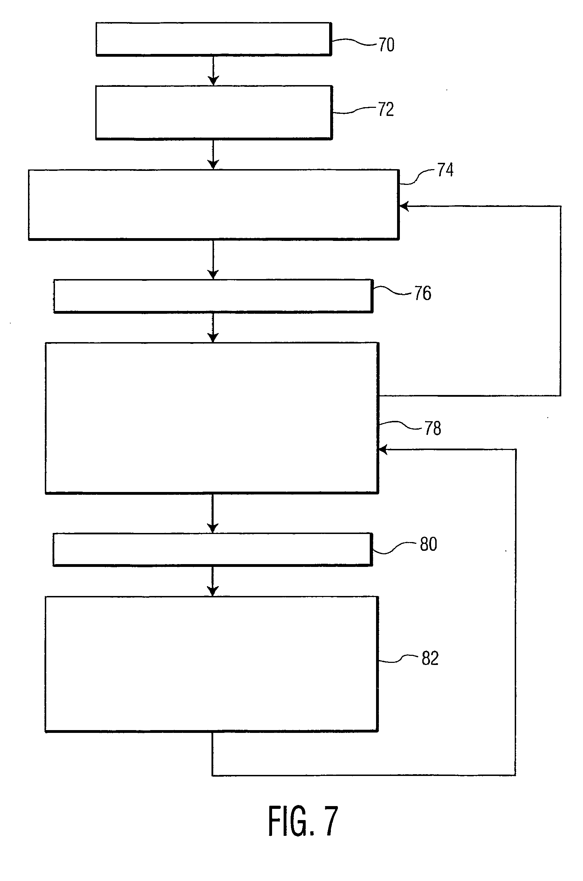

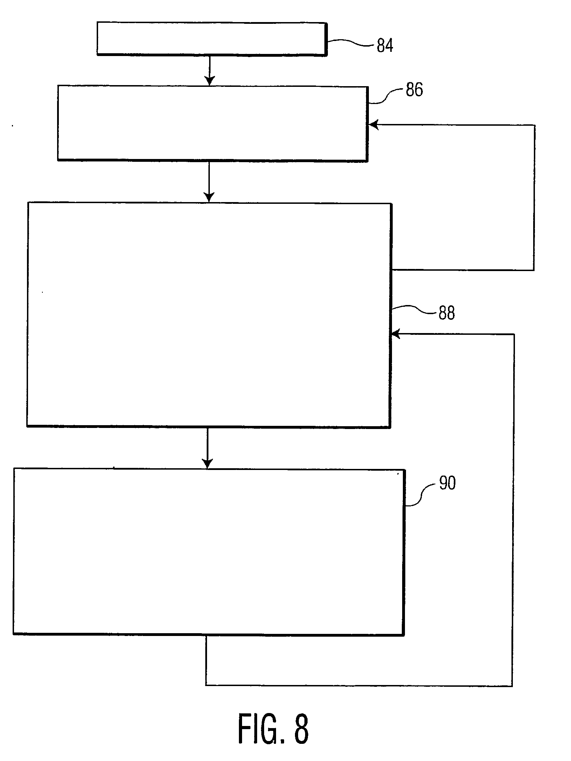

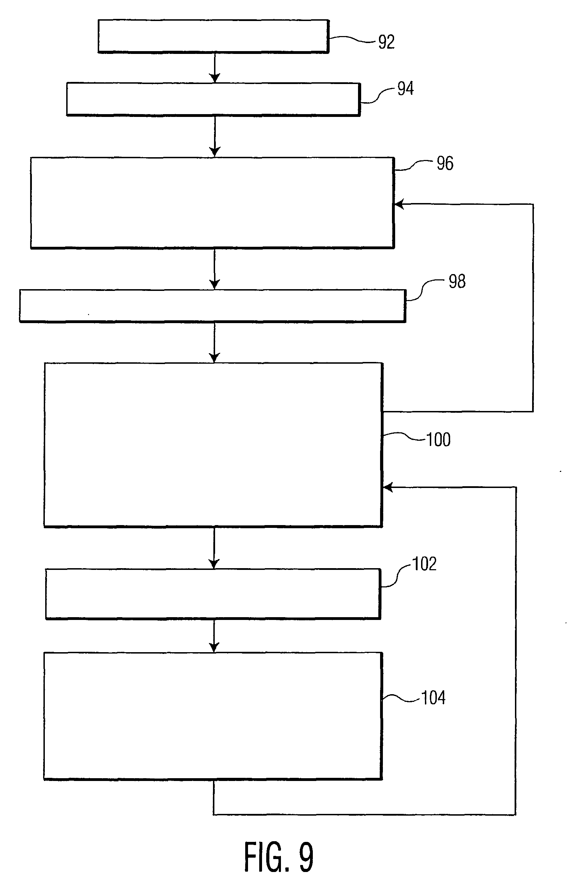

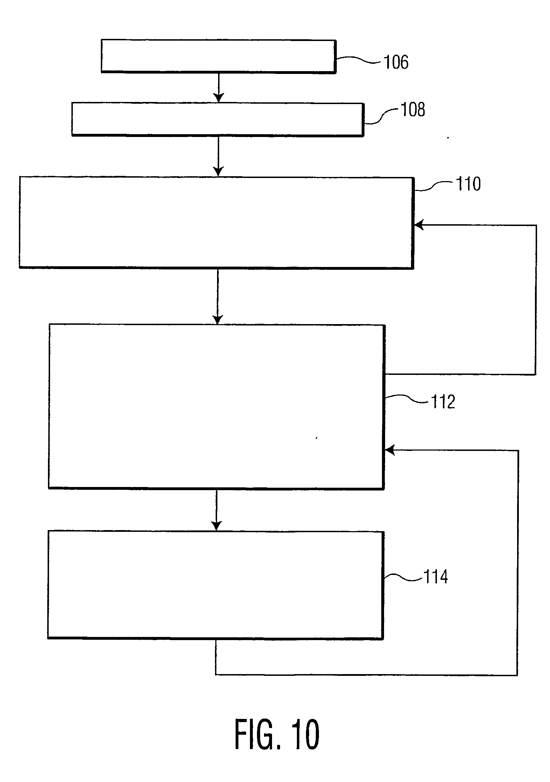

Having described a register architecture according to exemplary embodiments of the present invention, exemplary methods for transferring data using such an architecture will now be discussed with reference to the flowcharts of Figures 7-10, wherein Figures 7 and 8 depict a master-to-slave DMA transfer method and Figures 9 and 10 depict a slave-to-master DMA transfer method. On the master device's side, at step 70, the master device 30 first waits for the slave device 40 to initialize. This can be accomplished by, for example, the master device 30 polling one of the slave-to-master scratch registers and waiting for the slave device 40 to have written a predetermined value in that register. Next, at step 72, the master device 30 initializes the interrupts related to the master-to-slave mailboxes (Fig 6a). The slave device 40 uses these interrupts to indicate that a master-to-slave DMA channel has been initialized and is ready to receive data. The master device 30 then waits for data to send to the slave device 30 at step 74. At this step, the master device 30 knows that the slave device 40 has two master-to-slave DMA channels available. When master device 30 has data that needs to be transferred to the slave device 40, it then performs a DMA transfer at step 76. In a typical implementation of the slave DMA controller 46, the master device 30 does not have to keep track of which DMA channel the DMA data needs to be sent. The slave DMA controller 46 will automatically direct the incoming master-to-slave DMA data to the appropriate, next DMA channel. For this purpose the slave DMA controller 46 can have some hardware connect layer specific registers which are accessible by the master device 30 to enable this functionality. At step 78, the master device 30 is waiting for more data to send to the slave device 30 or for reception of an interrupt indicating that the slave device 30 has freed up the previously used DMA channel. Depending on which of the two indications comes in first, the master device 30 will change to the appropriate state, i.e., return to step 74 wherein two DMA channels are available or move on to step 80. Typically a slave-to-master mailbox interrupt is used by the slave device 40 to indicate to the master device 30 that a channel has been freed up again. However, there are other mechanisms available as well. For example, the master device 30 can periodically poll a scratch register, where the slave programmed value can be used to derive if the slave device 40 has any master-to-slave DMA channels available. Assuming that the flow next moves to step 80, the master device 30 once again has data that needs to be transferred to the slave device 40, and it sends the data via the DMA channel selected by the slave DMA controller 46. The flow then proceeds to step 82, wherein the master device 30 knows that the slave device has no free master-to-slave DMA channels available. The master device 30 then waits for an indication (interrupt or polling) from the slave that a DMA channel is freed up again and the flow returns to step 78.

Figure 8 shows an exemplary process which occurs during a master-to-slave DMA transfer from the slave device 40's perspective. Therein, the slave device 40 initializes the master-to-slave interface at step 84. This step might, for example, include programming some hardware connection layer specific registers 48. The generation of master-to-slave DMA interrupts (Fig. 6(h)) will also typically be enabled at step 84, as well as setting the locations for the two master-to-slave DMA channels in the respective registers. When all of the initialization is done, the slave device 40 indicates to the master device 30 that the initialization has finished by, for example, writing a predetermined value to one of the scratch registers. Next, at step 86, the slave device 30 waits for the master device's DMA data. In this state the slave has two master-to-slave DMA channels available. When the slave device 40 receives a master-to-slave DMA end interrupt the slave device 40 can determine from the DMA status register (Fig. 6(h)) for which master-to-slave DMA channel the interrupt was generated. With that information the slave can find the memory location of the DMA data and the size from the channel corresponding size and address registers (Figs. 6(i) and 6(j)). The slave software, e.g., antenna subsystem software, can then be triggered to process the received data.

The process then moves to step 88. Therein, the slave device 40 can check to determine if it has a new memory location available to reprogram the memory address (Fig. 6(i))) for the DMA channel which has previously received DMA data, e.g., if that DMA channel has not been cleared yet. If so, the address register for this DMA channel is updated, and a signal is sent to the master device 30 to indicate that a new channel is available. This can be accomplished by, for example, generating a slave-to-master mailbox interrupt to indicate to the master that a DMA channel has been freed up again. As mentioned above, however, polling or hybrid polling/interrupt based schemes can be used for this purpose as well. If no memory location was available and a new DMA end interrupt is received, the slave device 30 can derive from the DMA status register (Fig. 6(h)) for which master-to-slave DMA channel the interrupt was generated. With that information the slave device 30 can find the memory location of the DMA data and the size from the corresponding size and address registers (Figs. 6(i) and 6(j)). The slave software that will process the just received data will then be triggered.

The slave device 30 then moves to step 90 wherein it again waits for new memory to become available in which master-to-slave DMA package could be stored. When this memory becomes available, the address register for the next master to slave DMA channel is updated, and a trigger is generated to the master to indicate that a new channel is available. Those skilled in the art will appreciate that, instead of only a round robin approach using two memory locations for DMA transfers, the present invention can use three or more memory locations to implement the two DMA channels described above. For example, at steps 88 and 90 memory addresses which are different than those used at step 84 can be programmed into one or both of the address registers. Using more than two memory locations for master-slave DMA transactions can further reduce the latency, particularly for DMA transactions involving numerous data packages.

Figure 9 depicts a slave-to-master DMA data transfer method according to an exemplary embodiment of the present invention from the slave device 40's point of view. Therein, at step 92, the slave device 30 initializes the master-to-slave interface. This step can, for example, include programming some hardware connection layer specific registers 48. The master-to-slave DMA interrupts (Fig. 6(h)) can be enabled depending on later described communication algorithms. When the initialization is completed, the slave device 40 needs to indicate this to the master device 30. This can be accomplished by writing a predetermined value to one of the scratch registers. At step 94, the slave device 40 is waiting for an indication that the master device 40 has been initialized. This can be accomplished by, for example, the master device 30 polling one of the master-to-slave scratch registers and waiting for the slave to write a predetermined value in that register. Next, at step 96, the slave device 40 waits for data to send to the master device 30 and has two slave-to-master DMA channels available. When that data becomes available, at step 98, the slave device 40 initializes the address and size registers (Figs. 6(k), 6(l)) for the next DMA channel (Fig. 6(c)), and generates an indication to the master that a next slave-to-master DMA transfer has been setup. This indication can be an interrupt that is generated by writing to a mailbox register or updating a value in a scratch registers that the master polls, from which the master device can derive that new DMA data transfer has been setup. Upon reception of this indication, the master will initiate the master-to-slave DMA transfer. As mentioned earlier, the slave DMA controller 46 can automatically retrieve the slave-to-master DMA data from the valid channel without any intervention from the master device 30.

At step 100, the slave device 40 is waiting for more data to send to the master or for the reception of an indication that the master device 30 has retrieved the slave-to-master DMA data of the initialized channel. This indication can be provided by using the TX DMA end interrupt in the register of Fig. 6(h). This interrupt will indicate which channel data has been retrieved. Another method for providing this indication is that after retrieving the DMA data, the master device 30 writes to a master-to-slave mailbox register, which will generate an interrupt for the slave device 40. A third method is that the slave device 40 polls a master-to-slave scratch register, whose value will be updated by the master device 30 after retrieving the DMA data. Assuming that the slave has more data for the master prior to receiving an indication that the previous slave-to-master DMA transfer has been completed, the process transitions to step 102. Therein, the slave device 40 initializes the address and size registers (Figs. 6(k) and 6(l)) for the still available DMA channel, and generates a previously described indication to the master device 30 that a next slave-to-master DMA transfer has been setup. The flow then moves to step 104, wherein the slave device 40 has no free slave-to-master DMA channels available and, therefore, waits for an indication (interrupt or polling) from the master device 30 that a DMA channel is freed up again.

Turning now to the master device's perspective of the slave-to-master DMA transfer in Figure 9, the master device 30 waits for the slave device 40 to initialize at step 106. This can be accomplished by, for example, the master device 30 polling one of the slave-to-master scratch registers and waiting for the slave device 40 to write a predetermined value in that register. Next, the master device 30 initializes the slave DMA controller 46 at step 108. This step can, for example, include programming hardware connection layer specific registers 48. The generation of slave-to-master DMA interrupts (Fig. 6(h)) will also be enabled (if needed). When the initialization is completed, the master device 30 indicates this to the slave device 40. This indication can, for example, be accomplished by writing a predetermined value to one of the master-to-slave scratch registers.

The master device 30 then waits for a slave-to-master DMA data indication at step 110. In this state there are no slave-to-master channels pending with data to be read. There are several ways that the data indication can be generated. For example, the slave device 40 can indicate that it has data ready to transfer via an interrupt that is generated by the slave writing to a slave-to-master mailbox register. Alternatively, the slave device 40 can update a value in a scratch register that the master device 30 polls, from which the master can determine that new DMA data has been setup. Upon reception of this indication, the master device 30 will initiate the master-to-slave DMA transfer. As mentioned earlier, according to exemplary embodiments of the present invention, the master device 30 does not have to keep track of the DMA channel from which the DMA data needs to be retrieved. Instead, the slave DMA controller 46 can automatically retrieve the slave-to-master DMA from the valid channel. At step 112, the slave-to-master DMA transfer is ongoing. The master device 30 is waiting for either the end of DMA transfer indication (which is generated internally in the master), or a new indication from the slave device 40 that yet another DMA channel has been setup. When the end of DMA transfer indication is received, the master device 30 can trigger the function that will process the retrieved data. Depending on which 'end of slave to master DMA transfer' indication the slave uses, the master can write to a master-to-slave mailbox or scratch register to indicate that this transfer finished. When a new slave-to-master DMA data indication is received by the master device 30, and the previous DMA transfer has not yet finished, the process moves to step 114. Therein, the slave-to-master DMA is ongoing. The master is waiting for the end of DMA transfer indication (which is generated internally in the master). When the end of DMA transfer indication is received, the master can trigger the function that will process the retrieved data. Again, depending on which 'end of slave to master DMA transfer' indication the slave uses, the master device 30 can write to a master-to-slave mailbox or scratch register to indicate that this transfer finished, which returns the flow to step 100.

In the exemplary DMA methods described above, it is assumed that the slave DMA controller 46 has four parallel DMA channels, but the master device 30 does not. If the master device 30 also has four parallel DMA channels, the master device's flow diagrams would be similar to those of the slave device 40. Additionally, providing four parallel DMA channels for the master device would enable the master device 30 to setup several DMA transfers in parallel. Although the foregoing examples depict two DMA channels in each direction, those skilled in the art will appreciate that DMA architectures according to the present invention are not so limited. Instead, embodiments of the present invention could contain four, eight, sixteen or more DMA channels in each direction with a corresponding increase in the number of registers used to implement the architecture.

According to exemplary embodiments, the master device 30 initiates slave-to-master DMA transfers. If the slave device 40 has not initialized any slave-to-master DMA channels with a new memory address and size, the slave DMA controller 46 will automatically respond to the slave-to-master DMA transfer request with the indication that the DMA size is zero. As mentioned above, initiating a slave-to-master DMA data transfer can be accomplished in at least three different ways. First, a polling based initialization can be used. If this technique is used, then the master device 30 will periodically start a slave-to-master DMA command sequence and will read, among other things, the slave-to-master size registers to determine if any DMA data has been stored for transfer. If data is available, then the process outlined above is performed, otherwise the master device 30 awaits the next polling interval.

Alternatively, an interrupt based initialization can be used. After the slave device 40 has programmed the slave-to-master address and size registers, a mailbox register is then written to in order to generate an interrupt to the master device 30. This provides yet another example of the flexibility created by providing mailbox registers to DMA architectures according to the present invention. On reception of the interrupt generated by the mailbox register, the master will initiate a slave-to-master DMA sequence. Different mailbox registers can be used to initiate transfers from two different DMA memory locations. The slave device 40 should first check the interrupt status bits in the mailbox interrupt status/control register to ensure that an interrupt is not already pending for the mailbox registers it intends to use to signal the master device 30 to initiate the slave-to-master DMA data transfer.

Thirdly, a hybrid polling/interrupt based initialization technique can be used for slave-to-master DMA transfers according to exemplary embodiments of the present invention. To begin, the slave device 40 again writes to a mailbox register to generate an interrupt to the master 30 which is interpreted as a request to initiate a slave-to-master DMA transfer. While the transfer is occurring from the first memory location, the slave device 40 programs the registers and second memory location with the next DMA package to be transferred. However, instead of using another mailbox register to send an interrupt signal to the master device 30 to start the transfer of the second data portion, the master device 30 automatically initiates the second slave-to-master transfer sequence. The slave device 30 then uses the interrupt it receives upon completion of the first transfer to begin preparing the third data portion for transfer. This process continues until such time as the slave device 40 runs out of data associated with this DMA transaction at which time it sets the size register to zero. When the master device 30 requests the next block of data it will receive the size zero indication and end the DMA transaction.

Those skilled in the art will appreciate that the foregoing DMA architectures and methods provide sufficient programmability for interrupts and data transfers that they lend themselves to reuse without architectural changes between different types of master devices, slave devices, hardware interconnects and software applications. The ability to program the mailbox registers to selectively enable or disable interrupt generation, trigger the reading of scratch registers, etc., allows software developers to reuse code associated with this DMA architecture since it can maintain its register structure across different implementations.

The above-described exemplary embodiments are intended to be illustrative in all respects, rather than restrictive, of the present invention. Thus the present invention is capable of many variations in detailed implementation that can be derived from the description contained herein by a person skilled in the art. All such variations and modifications are considered to be within the scope of the present invention as defined by the following claims. No element, act, or instruction used in the description of the present application should be construed as critical or essential to the invention unless explicitly described as such. Also, as used herein, the article "a" is intended to include one or more items.

## Claims

1. A direct memory access (DMA) system for transferring information between a master device (30) and a slave device (40) comprising: a first plurality of DMA channels for transferring information from said master device (30) to said slave device (40); a second plurality of DMA channels for transferring information from said slave device (40) to said master device (30); a first set of control registers (Figs. 6a, 6c, 6d, 6e, 6h, 6i, 6j) which coordinate use of said first plurality of DMA channels to transfer information from said master device (30) to said slave device (40); and a second set of control registers (Figs. 6b, 6c, 6f, 6g, 6h, 6k, 61) which coordinate use of said second plurality of DMA channels to transfer information from said slave device (40) to said master device (30), wherein both said first set of control registers and said second set of control registers include at least one mailbox register (Figs. 6d, 6f) for selectively providing an interrupt signal to a respective one of said master device (30) and said slave device (40), in response to data written to said at least one mailbox register by the other of said master device and said slave device, during said DMA transaction.

2. The system of claim 1, wherein each of said first and second sets of control registers further comprise a mailbox interrupt status/control register (Figs. 6a,6b) for enabling/disabling mailbox interrupt generation for each of said at least one mailbox registers and for indicating whether one of said at least one mailbox interrupts is pending for each of said at least one mailbox registers.

3. The system of claim 1, wherein each of said first and second sets of control registers further comprise at least one scratch register (Figs. 6e,6g) for storing data which can be read in response to said interrupt signal generated by said at least one mailbox register.

4. The system of claim 1, further comprising a DMA interrupt status/control register (Fig. 6h) for enabling/disabling data transfer complete interrupt generation associated with a completion of transferring said information and for indicating whether one of said data transfer complete interrupts is pending for each of said first and second DMA channels.

5. The system of claim 1 further comprising: a first address register for storing a first address associated with one of said first plurality of DMA channels; a second address register for storing a second address associated with another of said first plurality of DMA channels; a third address register for storing a third address associated with one of said second plurality of DMA channels; and a fourth address register for storing a fourth address associated with another of said second plurality of DMA channels.

6. The system of claim 1, further comprising: a first size register for storing a size of said information transferred using one of said first plurality of DMA channels; a second size register for storing a size of said information transferred using another of said first plurality of DMA channels; a third size register for storing a size of said information transferred using one of said second plurality of DMA channels; and a fourth size register for storing a size of said information transferred using another of said first plurality of DMA channels.

7. The system of claim 1, further comprising: a DMA status/control register (Fig. 6c) for indicating, for each of said first and second plurality of DMA channels, whether DMA transfer activity is ongoing.

8. The system of claim 1, wherein said data written to said at least one mailbox register is a command requesting that more data be transferred.

9. The system of claim 1, wherein said data written to said at least one mailbox register is a command to activate a feature of one of said slave device and said master device.

10. The system of claim 9, wherein said feature is a reduce power consumption feature.

11. A method for direct memory access (DMA) information transfer between a master device (30) and a slave device (40) comprising the steps of: storing a first data portion received during a DMA transaction using a first DMA channel; storing a second data portion received during said DMA transaction using a second DMA channel; and selectively providing an interrupt signal to one of said master device (30) and said slave device (40), by writing data in at least one mailbox register (Figs. 6d, 6f) by the other of said master device (30) and said slave device(40), during said DMA transaction.

12. The method of claim 11, further comprising the step of: enabling/disabling mailbox interrupt generation for each of said at least one mailbox registers (Figs. 6d,6f) and for indicating whether one of said at least one mailbox interrupts is pending for each of said at least one mailbox registers using a mailbox interrupt status/control register (Figs. 6a, 6b).

13. The method system of claim 11, further comprising the step of: reading data stored in at least one scratch register (Figs. 6e, 6g) in response to said interrupt signal.

14. The method of claim 11, further comprising the step of: enabling/disabling data transfer complete interrupt generation associated with a completion of storing said first and second data portions and for indicating whether one of said data transfer complete interrupts is pending for each of said first and second DMA channels using a DMA interrupt status/control register (Fig. 6h).

15. The method of claim 11 further comprising the steps of: storing a first address associated with said first DMA channel; and storing a second address associated with said second DMA channel.

16. The method of claim 11, further comprising the steps of: storing a size of said first data portion; and storing a size of said second data portion.

17. The method of claim 11, further comprising the step of: providing an indication regarding whether transfer activity is currently ongoing in said first and second DMA channels.

18. The method of claim 11, wherein said data written to said at least one mailbox register is a command requesting that more data be transferred.

19. The method of claim 11, wherein said data written to said at least one mailbox register is a command to activate a feature of one of said slave device and said master device.

20. The method of claim 19, wherein said feature is a reduce power consumption feature.

21. The method of claim 15, further comprising the step of: storing a third data portion using said first DMA channel.

22. The method of claim 21, further comprising the step of: reprogramming a register which contains said first address with a third address that is different than said first address prior to said step of storing said third data portion.

23. The method of claim 21, further comprising the step of: storing a fourth data portion using said second DMA channel.

24. The method of claim 23, further comprising the step of: reprogramming a register which contains said second address with a fourth address that is different than said second address prior to said step of storing said fourth data portion.

25. The system of claim 1, wherein each of said first and second sets of control registers further comprise at least one scratch register for storing status information which can be read by one of said master device and said slave device

## Patentansprüche

1. System für direkten Speicherzugriff (DMA) zur Übertragung von Informationen zwischen einem Master-Gerät (30) und einem Slave-Gerät (40), das Folgendes umfasst: eine erste Vielzahl von DMA-Kanälen zur Übertragung von Informationen vom Master-Gerät (30) zum Slave-Gerät (40); eine zweite Vielzahl von DMA-Kanälen zur Übertragung von Informationen vom Slave-Gerät (40) zum Master-Gerät (30); einen ersten Satz Kontrollregister (Fig. 6a, 6c, 6d, 6e, 6h, 6i, 6j), die die Verwendung der ersten Vielzahl von DMA-Kanälen zur Übertragung vom Master-Gerät (30) zum Slave-Gerät (40) koordinieren; und einen zweiten Satz Kontrollregister (Fig. 6b, 6c, 6f, 6g, 6h, 6k, 61), die die Verwendung der zweiten Vielzahl von DMA-Kanälen zur Übertragung von Informationen vom Slave-Gerät (40) zum Master-Gerät (30) koordinieren, wobei sowohl der besagte erste Satz Kontrollregister als auch der besagte zweite Satz Kontrollregister mindestens ein Mailbox-Register (Fig. 6d, 6f) zur selektiven Bereitstellung eines Interrupt-Signals an ein Betreffendes des Master-Gerätes (30) und des Slave-Gerätes (40) beinhaltet, in Reaktion auf Daten, die zum mindestens einen Mailbox-Register durch das Andere des Master-Geräts und des Slave-Geräts während der besagten DMA-Übertragung geschrieben werden.

2. System nach Anspruch 1, worin jeder des ersten und zweiten Satzes der Kontrollregister außerdem ein Mailbox-Interrupt-Status/Kontrollregister (Fig. 6a, 6b) umfasst, zum Aktivieren/Deaktivieren der Mailbox-Interrupt-Generierung für jedes des mindestens einen Mailbox-Registers, und zur Anzeige, ob eines des mindestens einen Mailbox-Interrupts für jedes des mindestens einen Mailbox-Registers anstehend ist.

3. System nach Anspruch 1, worin jeder des ersten und zweiten Satzes der Kontrollregister außerdem ein Scratch-Register (Fig. 6e, 6g) umfasst, zum Speichern von Daten, die in Reaktion auf das Interrupt-Signal, das vom mindestens einen Mailbox-Register generiert wird, gelesen werden können.

4. System nach Anspruch 1, das außerdem ein DMA-Interrupt-Status/Kontrollregister (Fig. 6h) umfasst, zum Aktivieren/Deaktivieren der Datenübertragung-komplett-Interrupt-Generierung, die mit dem Abschluss der Übertragung der Informationen zusammenhängt, und zur Anzeige, ob eines der besagten Datenübertragung-komplett-Interrupts für jeden der besagten ersten und zweiten DMA-Kanäle ansteht.

5. System nach Anspruch 1, das außerdem Folgendes enthält: ein erstes Adressenregister zum Speichern einer ersten Adresse, die mit einem der ersten Vielzahl von DMA-Kanälen zusammenhängt; ein zweites Adressenregister zum Speichern einer zweiten Adresse, die mit einem anderen der ersten Vielzahl von DMA-Kanälen zusammenhängt; ein drittes Adressenregister zum Speichern einer dritten Adresse, die mit einem der zweiten Vielzahl von DMA-Kanälen zusammenhängt; und ein viertes Adressenregister zum Speichern einer vierten Adresse, die mit einem anderen der zweiten Vielzahl von DMA-Kanälen zusammenhängt

6. System nach Anspruch 1, das außerdem Folgendes enthält: ein erstes Größen-Register zum Speichern einer Größe der unter Verwendung eines aus der ersten Vielzahl von DMA-Kanälen übertragenen Informationen; ein zweites Größen-Register zum Speichern einer Größe der unter Verwendung eines anderen aus der ersten Vielzahl von DMA-Kanälen übertragenen Informationen; ein drittes Größen-Register zum Speichern einer Größe der unter Verwendung eines aus der zweiten Vielzahl von DMA-Kanälen übertragenen Informationen; und ein viertes Größen-Register zum Speichern einer Größe der unter Verwendung eines anderen aus der ersten Vielzahl von DMA-Kanälen übertragenen Informationen.

7. System nach Anspruch 1, das außerdem Folgendes enthält: ein DMA-Status/Kontrollregister (Fig. 6c) zur Anzeige für jede der besagten ersten und zweiten Vielzahl von DMA-Kanälen, ob die DMA-Übertragungsaktivität im Gange ist.

8. System nach Anspruch 1, worin die Daten, die in das mindestens eine Mailbox-Register geschrieben wurden, ein Befehl sind, der die Übertragung von weiteren Daten anfordert.

9. System nach Anspruch 1, worin die besagten Daten, die in das mindestens eine Mailbox-Register geschrieben wurden, ein Befehl zum Aktivieren eines Merkmals eines des Slave-Gerätes und des Master-Gerätes ist.

10. System nach Anspruch 9, worin das Merkmal eine Funktion zur Reduzierung des Stromverbrauchs ist.

11. Verfahren zum direkten Speicherzugriff (DMA) zur Übertragung von Informationen zwischen einem Master-Gerät (30) und einem Slave-Gerät (40), mit folgenden Schritten: Speichern eines ersten Datenteils, der während einer DMA-Transaktion unter Verwendung eines ersten DMA-Kanals empfangen wurde; Speichern eines zweiten Datenteils, der während der DMA-Transaktion unter Verwendung eines zweiten DMA-Kanals empfangen wurde; und selektive Bereitstellung eines Interrupt-Signals an eines des Master-Gerätes (30) und des Slave-Gerätes (40), indem von dem anderen des Master-Gerätes (30) und des Slave-Gerätes (40) während der DMA-Transaktion Daten in mindestens ein Mailbox-Register (Fig. 6d, 6f) geschrieben werden.

12. Verfahren nach Anspruch 11, das ferner folgenden Schritt umfasst: Aktivieren/Deaktivieren der Mailbox-Interrupt-Generierung für jedes der Mailbox-Register (Fig. 6d, 6f), und zur Anzeige, ob einer der Mailbox-Interrupts für jedes des mindestens einen besagten Mailbox-Registers unter Verwendung eines Mailbox-Interrupt-Status/Kontrollregisters ansteht (Fig. 6a, 6b).

13. Verfahren nach Anspruch 11, das ferner folgenden Schritt umfasst: Lesen von Daten, die in mindestens einem Scratch-Register (Fig. 6e, 6g) gespeichert wurden, in Reaktion auf das Interrupt-Signal.

14. Verfahren nach Anspruch 11, das ferner folgenden Schritt umfasst: Aktivieren/Deaktivieren einer Datenübertragung-komplett-Interrupt-Generierung, die mit einer Durchführung der Speicherung der ersten und zweiten Datenteile zusammenhängt, und zur Anzeige, ob eines der Datenübertragung-komplett-Interrupts für jeden der ersten und zweiten DMA-Kanäle unter Verwendung eines DMA-Interrupt-Status/Kontrollregisters ansteht (Fig. 6h).

15. Verfahren nach Anspruch 11, das ferner folgende Schritte umfasst: Speichern einer ersten Adresse, die mit dem ersten DMA-Kanal zusammenhängt; und Speichern einer zweiten Adresse, die mit dem zweiten DMA-Kanal zusammenhängt.

16. Verfahren nach Anspruch 11, das ferner folgende Schritte umfasst: Speichern einer Größe des ersten Datenteils; und Speichern einer Größe des zweiten Datenteils.

17. Verfahren nach Anspruch 11, das ferner folgenden Schritt umfasst: Bereitstellen einer Angabe, die anzeigt, ob die Übertragungsaktivität zurzeit in den ersten und zweiten DMA-Kanälen im Gange ist.

18. Verfahren nach Anspruch 11, worin die Daten, die an das mindestens eine Mailbox-Register geschrieben werden, ein Befehl sind, der die Übertragung von weiteren Daten anfordert.

19. Verfahren nach Anspruch 11, worin die Daten, die auf das mindestens eine Mailbox-Register geschrieben werden, ein Befehl zum Aktivieren eines Merkmals von einem des Slave-Gerätes und des Master-Gerätes sind.

20. Verfahren nach Anspruch 19, worin das Merkmal eine Funktion zur Reduzierung des Stromverbrauchs ist.

21. Verfahren nach Anspruch 15, das ferner folgenden Schritt umfasst: Speichern eines dritten Datenteils unter Verwendung des ersten DMA-Kanals.

22. Verfahren nach Anspruch 21, das ferner folgenden Schritt umfasst: Umprogrammieren eines Registers, das die erste Adresse enthält, mit einer dritten Adresse, die anders als die erste Adresse ist, vor dem Schritt zum Speichern des dritten Datenteils erfolgt.

23. Verfahren nach Anspruch 21, das ferner folgenden Schritt umfasst: Speichern eines vierten Datenteils unter Verwendung des zweiten DMA-Kanals.

24. Verfahren nach Anspruch 23, das ferner folgenden Schritt umfasst: Umprogrammieren eines Registers, das die zweite Adresse enthält, mit einer vierten Adresse, die anders als die zweite Adresse ist, vor dem Schritt zum Speichern des vierten Datenteils.

25. System nach Anspruch 1, worin jeder des ersten und zweiten Satzes Kontrollregister außerdem mindestens ein Scratch-Register zum Speichern von Statusinformationen, die von einem des Master-Gerätes und des Slave-Gerätes gelesen werden können, umfasst.

## Revendications

1. Système d'accès direct à la mémoire (DMA) pour transférer des informations entre un dispositif maître (30) et un dispositif esclave (40) comprenant : une première pluralité de canaux DMA pour transférer des informations dudit dispositif maître (30) audit dispositif esclave (40) ; une deuxième pluralité de canaux DMA pour transférer des informations dudit dispositif esclave (40) audit dispositif maître (30) ; un premier ensemble de registres de commande (figures 6a, 6c, 6d, 6e, 6h, 6i, 6j) qui coordonnent l'utilisation de ladite première pluralité de canaux DMA pour transférer des informations dudit dispositif maître (30) audit dispositif esclave (40) ; et un deuxième ensemble de registres de commande (figures 6b, 6c, 6f, 6g, 6h, 6k, 61) qui coordonnent l'utilisation de ladite deuxième pluralité de canaux DMA pour transférer des informations dudit dispositif esclave (40) audit dispositif maître (30), dans lequel lesdits premier ensemble de registres de commande et deuxième ensemble de registres de commande comprennent au moins un registre de boîte aux lettres (figures 6d, 6f) pour appliquer de manière sélective un signal d'interruption à l'un respectif dudit dispositif maître (30) et dudit dispositif esclave (40), en réponse à des données écrites dans ledit au moins un registre de boîte aux lettres par l'autre dudit dispositif maître et dudit dispositif esclave, pendant ladite transaction DMA.

2. Système selon la revendication 1, dans lequel chacun desdits premier et deuxième ensembles de registres de commande comprend en outre un registre d'état/de commande d'interruption de boîte aux lettres (figures 6a, 6b) pour activer/désactiver la production d'interruptions de boîte aux lettres pour chacun desdits au moins un des registres de boîte aux lettres et pour indiquer si l'une desdites au moins une interruption de boîte aux lettres est en attente pour chacun desdits au moins un des registres de boîte aux lettres.

3. Système selon la revendication 1, dans lequel chacun desdits premier et deuxième ensembles de registres de commande comprennent en outre au moins un registre de manoeuvre (figures 6e, 6g) pour mémoriser des données qui peuvent être lues en réponse audit signal d'interruption produit par ledit au moins un registre de boîte aux lettres.

4. Système selon la revendication 1, comprenant en outre un registre d'état/de commande d'interruption de DMA (figure 6h) pour activer/désactiver la production d'interruptions complètes de transfert de données associée à l'achèvement du transfert desdites informations et pour indiquer si l'une desdites interruptions complètes de transfert de données est en attente pour chacun desdits premier et deuxième canaux DMA.

5. Système selon la revendication 1, comprenant en outre : un premier registre d'adresse pour mémoriser une première adresse associée à l'un de ladite première pluralité de canaux DMA ; un deuxième registre d'adresse pour mémoriser une deuxième adresse associée à un autre de ladite première pluralité de canaux DMA ; un troisième registre d'adresse pour mémoriser une troisième adresse associée à l'un de ladite deuxième pluralité de canaux DMA ; et un quatrième registre d'adresse pour mémoriser une quatrième adresse associée à un autre de ladite deuxième pluralité de canaux DMA.

6. Système selon la revendication 1, comprenant en outre : un premier registre de taille pour mémoriser une taille desdites informations transférées en utilisant l'un de ladite première pluralité de canaux DMA ; un deuxième registre de taille pour mémoriser une taille desdites informations transférées en utilisant un autre de ladite première pluralité de canaux DMA ; un troisième registre de taille pour mémoriser une taille desdites informations transférées en utilisant l'un de ladite deuxième pluralité de canaux DMA ; et un quatrième registre de taille pour mémoriser une taille desdites informations transférées en utilisant un autre de ladite première pluralité de canaux DMA.

7. Système selon la revendication 1, comprenant en outre : un registre d'état/de commande de DMA (figure 6c) pour indiquer, pour chacun desdites première et deuxième pluralités de canaux DMA, si l'activité de transfert DMA est en cours.

8. Système selon la revendication 1, dans lequel lesdites données écrites dans ledit au moins un registre de boîte aux lettres est une commande de requête pour le transfert de davantage de données.

9. Système selon la revendication 1, dans lequel lesdites données écrites dans ledit au moins un registre de boîte aux lettres est une commande d'activation d'une fonction de l'un dudit dispositif esclave et dudit dispositif maître.

10. Système selon la revendication 9, dans lequel ladite fonction est une fonction de diminution de la consommation d'énergie.

11. Procédé pour le transfert d'informations par accès direct à la mémoire (DMA) entre un dispositif maître (30) et un dispositif esclave (40), comprenant les étapes consistant à : mémoriser une première portion de données reçue pendant une transaction DMA en utilisant un premier canal DMA ; mémoriser une deuxième portion de données reçue pendant ladite transaction DMA en utilisant un deuxième canal DMA ; et appliquer de manière sélective un signal d'interruption à l'un dudit dispositif maître (30) et dudit dispositif esclave (40), par l'écriture de données dans au moins un registre de boîte aux lettres (figures 6d, 6f) par l'autre dudit dispositif maître (30) et dudit dispositif esclave (40), pendant ladite transaction DMA.

12. Procédé selon la revendication 11, comprenant en outre l'étape consistant à : activer/désactiver la production d'interruptions de boîte aux lettres pour chacun desdits au moins un registre de boîte aux lettres (figures 6d, 6f) et pour indiquer si l'un desdites au moins une interruption de boîte aux lettres est en attente pour chacun desdits au moins un registre de boîte aux lettres en utilisant un registre d'état/de commande d'interruption de boîte aux lettres (figures 6a, 6b).

13. Procédé selon la revendication 11, comprenant en outre l'étape consistant à : lire des données mémorisées dans au moins un registre de manoeuvre (figures 6e, 6g) en réponse audit signal d'interruption.

14. Procédé selon la revendication 11, comprenant en outre l'étape consistant à : activer/désactiver la production d'interruptions complètes de transfert de données associée à l'achèvement de la mémorisation desdites première et deuxième portions de données et pour indiquer si l'une desdites interruptions complètes de transfert de données est en attente pour chacun desdits premier et deuxième canaux DMA en utilisant un registre d'état/de commande d'interruption de DMA (figure 6h).

15. Procédé selon la revendication 11, comprenant en outre les étapes consistant à : mémoriser une première adresse associée audit premier canal DMA ; et mémoriser une deuxième adresse associée audit deuxième canal DMA.

16. Procédé selon la revendication 11, comprenant en outre les étapes consistant à : mémoriser une taille de ladite première portion de données ; et mémoriser une première taille de ladite deuxième portion de données.

17. Procédé selon la revendication 11, comprenant en outre l'étape consistant à : fournir une indication pour savoir si l'activité de transfert est actuellement en cours dans lesdits premier et deuxième canaux DMA.

18. Procédé selon la revendication 11, dans lequel lesdites données écrites dans ledit au moins un registre de boîte aux lettres est une commande de requête pour le transfert de davantage de données.

19. Procédé selon la revendication 11, dans lequel lesdites données écrites dans ledit au moins un registre de boîte aux lettres est une commande d'activation d'une fonction de l'un dudit dispositif esclave et dudit dispositif maître.

20. Procédé selon la revendication 19, dans lequel ladite fonction est une fonction de diminution de la consommation d'énergie.

21. Procédé selon la revendication 15, comprenant en outre l'étape consistant à : mémoriser une troisième portion de données en utilisant ledit premier canal DMA.

22. Procédé selon la revendication 21, comprenant en outre l'étape consistant à : reprogrammer un registre qui contient ladite première adresse avec une troisième adresse qui est différente de ladite première adresse avant ladite étape de mémorisation de ladite troisième portion de données.

23. Procédé selon la revendication 21, comprenant en outre l'étape consistant à : mémoriser une quatrième portion de données en utilisant ledit deuxième canal DMA.

24. Procédé selon la revendication 23, comprenant en outre l'étape consistant à : reprogrammer un registre qui contient ladite deuxième adresse avec une quatrième adresse qui est différentes de ladite deuxième adresse avant ladite étape de mémorisation de ladite quatrième portion de données.

25. Système selon la revendication 1, dans lequel chacun desdits premier et deuxième ensembles de registres de commande comprennent en outre au moins un registre de manoeuvre pour mémoriser des informations d'état qui peuvent être lues par l'un dudit dispositif maître et dudit dispositif esclave.
